Europäisches Patentamt

European Patent Office

Office européen des brevets

(19)

(11) EP 0 894 611 B1

(12) **FASCICULE DE BREVET EUROPEEN**

(45) Date de publication et mention
de la délivrance du brevet:
**29.01.2003 Bulletin 2003/05**

(51) Int Cl.⁷: **B29C 53/04**, B29D 24/00

(21) Numéro de dépôt: **98401923.2**

(22) Date de dépôt: **28.07.1998**

(54) **Procédé pour réaliser une pièce en matériau sandwich à âme alvéolaire pourvue d'une zone déformée en profondeur**

Verfahren zum Herstellen eines Gegenstandes aus Sandwichmaterial mit wabenförmigem Kern, das eine stark verformte Zone aufweist

Method for forming an article made of cellular sandwich material with a deeply deformed area

(84) Etats contractants désignés:
**DE FR**

(30) Priorité: **30.07.1997 FR 9709705**

(43) Date de publication de la demande:
**03.02.1999 Bulletin 1999/05**

(73) Titulaire: **PEGUFORM FRANCE**
**27950 Saint Marcel (FR)**

(72) Inventeurs:
• **Fouilland, Michel**
**05100 Amberieu En Bugey (FR)**

• **Chervin, Christophe**
**63550 Saint-Remy-sur-Durolle (FR)**
• **Hochet, Nicolas**
**49500 La Chapelle Sur Oudon (FR)**

(74) Mandataire: **Schrimpf, Robert**
**Cabinet Regimbeau**
**20, rue de Chazelles**
**75847 Paris cedex 17 (FR)**

(56) Documents cités:
EP-A- 0 649 736     DE-A- 4 130 620
US-A- 3 196 533     US-A- 4 917 747
US-A- 5 096 526

**Description**

La présente invention concerne de manière générale les pièces pour véhicules automobiles, réalisées par pressage d'un panneau composite du type sandwich à âme alvéolaire.

Plus particulièrement, elle a pour objet un procédé de réalisation d'une telle pièce en matériau composite du type sandwich à âme alvéolaire, pourvue d'une zone emboutie profonde.

Elle a pour objet également une pièce pour véhicules automobiles telle que réalisée selon un tel procédé.

Une application particulièrement avantageuse de l'invention se trouve notamment dans la réalisation de structures d'assises et de dossiers de sièges, de tablier, de trappe d'air-bag, de tablette arrière, de parties de plancher, et plus généralement de pièces de cloisonnement servant à isoler l'habitacle d'un véhicule vis-à-vis de l'extérieur.

On entend ici par zone emboutie profonde ou en profondeur, une zone présentant une déformation importante qui, mesurée perpendiculairement au plan général dans lequel s'étend la majeure partie de la pièce réalisée en matériau composite du type sandwich, est par exemple supérieure à la somme des épaisseurs des peaux et de l'âme alvéolaire constitutive dudit matériau sandwich. Une telle zone comprend généralement des parties pliées à faible rayon de courbure. On entend également par zone emboutie en profondeur, une zone de pliage à faible rayon de courbure.

Les matériaux composites du type sandwich qui nous intéressent ici, comprennent généralement une âme alvéolaire, qui peut être une mousse ou une âme pourvue d'une pluralité d'alvéoles de forme géométrique déterminée, délimitées par des parois fines en matériau thermoplastique et régulièrement réparties, prise en sandwich entre deux peaux constituées par un matériau thermoplastique renforcé principalement par des fibres de verre.

Ces matériaux composites sont actuellement le plus souvent utilisés pour réaliser des pièces planes ou galbées à très grand rayon de courbure.

Dès qu'il s'agit de plier un tel matériau selon un faible rayon de courbure (de l'ordre de grandeur de son épaisseur), les choses se compliquent.

Dans la pratique, lorsqu'on réalise un tel pliage suivant un faible rayon de courbure d'un matériau composite du type sandwich, on constate un écrasement de l'âme alvéolaire par la peau externe formant la face convexe du pliage, la distance entre les deux peaux étant alors réduite localement, ce qui diminue la rigidité du matériau sandwich.

En effet, si on considère une zone de peau pliée présentant un rayon de courbure R, la longueur de peau nécessaire pour former le rayon R de la peau est égale à :

$$1 = \pi/180° \times R\Theta.$$

On voit alors selon la formule précitée, que dans une zone pliée d'un matériau du type sandwich tel que précité, la peau située à l'extérieur de la courbure qui est pliée selon un rayon plus grand que celle qui se trouve à l'intérieur de la courbure, doit présenter une plus grande longueur que celle située à l'intérieur, ou encore elle doit s'être déplacée sur l'âme alvéolaire.

Selon les procédés connus de réalisation d'une pièce par thermocompression d'un panneau composite du type sandwich, les première et deuxième peaux sont préalablement chauffées indépendamment ou non de l'âme alvéolaire. A la sortie du four, le matériau thermoplastique des peaux s'est ramolli, et lors du pressage du panneau composite, il a commencé à fusionner avec la matière thermoplastique de l'âme alvéolaire. De plus, il peut s'avérer que le panneau composite constitué par l'empilement de la première peau, de l'âme alvéolaire et de la seconde peau, soit bloqué au moins sur un côté par les deux parties du moule, ce qui limite les glissements possibles en augmentant les frottements entre les peaux et l'âme alvéolaire.

Ainsi, les peaux ont peu de liberté de mouvement et il faut considérer que la peau externe formant la face convexe de pliage et située du côté de la face concave du moule ne peut pas glisser sur l'âme, pour se plier selon le rayon de courbure déterminé. Elle doit alors présenter une longueur supérieure à la longueur de celle située du côté de la face convexe du moule pour pouvoir réaliser un pliage du matériau sandwich selon un rayon déterminé sans écraser le matériau à l'endroit du pliage.

Comme tel n'est pas le cas, la peau située à l'extérieur de la courbure du côté de la face concave du moule, qui n'est pas totalement libre de se déplacer et à qui il manque localement de la longueur pour former correctement le rayon souhaité, subie des contraintes de tension. Ces contraintes de tension conduisent alors cette peau à exercer à son tour des contraintes de compression sur ladite partie de l'âme qui la supporte dans cette zone de forte courbure. La tension de cette peau est suffisante pour imposer à l'âme une compression supérieure à sa résistance en compression et l'âme s'écrase localement.

On notera en outre, que les peaux constituées par des fibres de verre noyées dans un matériau thermoplastique, ne présentent pas une élasticité suffisante leur conférant la capacité d'allongement voulue pour obtenir une longueur supplémentaire nécessaire à la formation d'un pliage sans écraser l'âme.

Compte tenu par ailleurs que les âmes alvéolaires présentent des valeurs de contrainte en compression qui dépassent rarement 2 à 3 MPa (comprise entre 0,5 et 1,5 MPa pour une mousse) et plutôt une résistance maximum en compression d'environ 1 MPa, la peau ne se déchirera probablement pas sous l'action de la résistance de l'âme mais l'écrasera.

Ainsi à moins que les forces de frottement entre les peaux et l'âme alvéolaire ne soient plus faibles que la résistance en compression de l'âme alvéolaire, cette dernière sera systématiquement écrasée lors d'un pliage.

Pour éviter un tel écrasement de l'âme du matériau sandwich lors de son pliage, il paraît cependant difficile de diminuer les forces de frottement entre les peaux et l'âme en contact, car cela implique une diminution de la qualité de leur interface. Or, l'interface entre les peaux et l'âme du matériau sandwich doit être la meilleure possible pour obtenir une rigidité maximale et tirer le meilleur parti des caractéristiques mécaniques de celui-ci.

Les problèmes que pose la réalisation de pièces comprenant des zones embouties en profondeur, ont été rencontrés dans le domaine de la mise en forme des métaux et plus particulièrement de la tôle en acier et en aluminium, mais aussi dans le domaine de l'aéronautique où l'on utilise souvent des matériaux composites du type sandwich.

Dans le domaine de l'aéronautique, pour réaliser de telles pièces avec des zones embouties en profondeur comprenant des parties pliées, à partir d'un panneau en matériau composite du type sandwich à âme alvéolaire, une solution consiste à inciser la où les peaux ou éventuellement l'âme alvéolaire, ce qui revient à ôter du panneau une partie de peau et d'âme alvéolaire dans les parties pliée.

Pour combler le trou une fois la pièce formée, on ajoute alors de la résine, dès lors que le(s) angle(s) de courbure de(s) partie(s) pliée(s) de la pièce formée est ou sont inférieure(s) à 90° ou que le niveau des sollicitations de la pièce formée n'est pas trop important.

Dès lors que le ou les angle(s) de courbure de ou des partie(s) pliée(s) de la pièce formée est ou sont proche(s) de 90° ou que le niveau des sollicitations de la pièce formée en matériau sandwich est élevé, on utilise des inserts métalliques introduits dans les évidements de l'âme et des peaux du matériau sandwich et fixés à l'aide de résine.

Le principal inconvénient de cette solution est que compte tenu de la forme complexe des inserts à introduire pour combler les trous pratiqués dans l'âme et la ou les peau(x) permettant une formation à angle droit du panneau, une telle opération d'insertion est réalisée lors d'une étape de reprise, ce qui multiplie ainsi les postes de travail et le temps global de cycle nécessaires à la fabrication de la pièce. Le coût de fabrication d'une telle pièce s'en trouve alors alourdi.

En outre, la résine et les inserts utilisés pour combler les trous des panneaux composites du type sandwich lors de la formation de telles pièces comprenant des zones embouties profondes, ne sont pas constituées par du polypropylène ou du verre. Un tel ensemble devient alors indémontable à moins de détruire le produit. Ceci nécessite alors un traitement particulier de découpage et de tri.

Enfin les inserts métalliques qui sont introduits dans de telles pièces courbées à environ 90° présentent une densité bien plus importante que le matériau sandwich seul. Ils alourdissent alors énormément la pièce finie, dégradant le rapport rigidité sur poids.

Dans le domaine de l'emboutissage des métaux, les paramètres sur lesquels on joue pour réaliser un embouti profond sont : la grande capacité d'allongement élastique du métal ainsi que sa capacité à se déformer plastiquement avant la rupture ; la pression de serrage des bords de la tôle par les serre-flancs situés aux extrémités du moule. Il est possible de permettre à toute l'épaisseur de la tôle de glisser et d'accompagner le poinçon durant une partie de sa course pour être ensuite déformée plastiquement. La tôle peut être préformée afin d'augmenter le développé et d'éviter les allongements locaux tels que la tôle se déchire.

Toutefois, lors de la réalisation de l'embouti profond dans une tôle en métal, il n'est pas possible d'empêcher une quelconque diminution d'épaisseur qui est due à une faible résistance en compression. Au contraire, on fait fluer le métal pour l'allonger et obtenir la surface développable nécessaire.

Par rapport à l'état de la technique précité, la présente invention propose un nouveau procédé pour réaliser par thermocompression de pièces en matériau composite du type sandwich à âme alvéolaire qui comprennent une ou des zone(s) embouti(s) en profondeur tout en conservant des épaisseurs de pièces constantes, utilisant des outillages peu complexes, et présentant un minimum d'étapes de fabrication afin de réduire les temps de cycle, diminuer les risques de rebut et alléger alors les coûts de fabrication.

Plus particulièrement, la présente invention propose un procédé pour réaliser une pièce de véhicules automobiles, par pressage par une pression comprise entre 1 et 3 MPa, d'un panneau comprenant un empilement constitué d'au moins une première peau, d'une âme alvéolaire en matériau thermoplastique et d'une deuxième peau, lesdites peaux étant constituées d'un matériau thermoplastique renforcé. Il est caractérisé en ce qu'il comprend les étapes suivantes :

a) on place entre la peau située du côté de la face concave du moule et l'âme alvéolaire, à un endroit déterminé, au moins un élément de réserve de façon à décoller à cet endroit ladite peau de l'âme alvéolaire,

b) on presse ledit panneau, lesdites première et deuxième peaux étant ramollies, de sorte qu'à l'endroit où est placé l'élément de réserve on forme une zone emboutie en profondeur tout en conservant une épaisseur de pièce constante.

Ainsi selon l'invention, grâce à l'introduction avant le pressage du panneau composite du type sandwich, de l'élément de réserve entre la peau tournée vers la face concave du moule de formage et l'âme alvéolaire, il est possible de réserver une quantité suffisante de peau à l'endroit voulu pour réaliser ultérieurement dans le panneau une zone emboutie en profondeur sans diminuer localement l'épaisseur de celui-ci.

La pièce ainsi obtenue conserve à l'endroit de la zone emboutie profonde les caractéristiques de rigidité du matériau sandwich.

De plus, avantageusement, dans le procédé selon l'invention, l'étape d'introduction de l'élément de réserve entre une peau et l'âme alvéolaire du panneau composite du type sandwich, s'intègre dans le processus de fabrication sans véritablement ajouter une étape supplémentaire, puisque cette introduction est réalisée lors de l'étape d'empilement (déjà existante) des peaux et de l'âme pour former le panneau, ce qui permet de conserver un minimum d'étapes de réalisation et un coût de fabrication des pièces aussi faible que possible.

Selon une caractéristique avantageuse du procédé selon l'invention, à l'étape a) on réalise un pré-assemblage dudit empilement comprenant l'élément de réserve, par soudage à chaud de la première peau à la deuxième peau au niveau des coins dudit empilement, puis on chauffe ledit pré-assemblage à une température de ramollissement des première et deuxième peaux de sorte que la peau recouvrant l'élément de réserve épouse sensiblement la forme de ce dernier.

Selon le procédé conforme á l'invention, l'élément de réserve est avantageusement constitué par du polypropylène de sorte qu'il peut être recyclé.

Selon une première variante du procédé conforme à l'invention, l'élément de réserve est un bloc de mousse dont la densité et la résistance en compression sont faibles.

Selon une deuxième variante du procédé conforme à l'invention, l'élément de réserve est un ballon à paroi fine, gonflé à l'air.

Selon une troisième variante, l'élément de réserve est un support solide comprenant des zones fusibles.

L'invention propose également une pièce pour véhicules automobiles comprenant au moins une zone emboutie en profondeur, réalisée selon le procédé précité.

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement l'étape préliminaire a) d'un mode de réalisation du procédé conforme à l'invention,
- la figure 2 représente schématiquement l'étape de pré-assemblage d'une variante préférée du procédé selon l'invention,
- la figure 3 représente l'étape de pressage du panneau de la figure 2 selon le procédé conforme à l'invention,

- la figure 4 représente un mode de réalisation d'un élément de réserve utilisé dans le procédé selon l'invention,
- la figure 5 représente une variante de réalisation de l'étape a) du procédé selon l'invention,
- la figure 6 est une photographie d'un outil de thermocompression utilisé pour des essais du procédé selon l'invention,
- la figure 7 est une photographie d'une pièce formée conformément au procédé selon l'invention et d'une pièce formée conformément à un procédé de l'état de la technique.

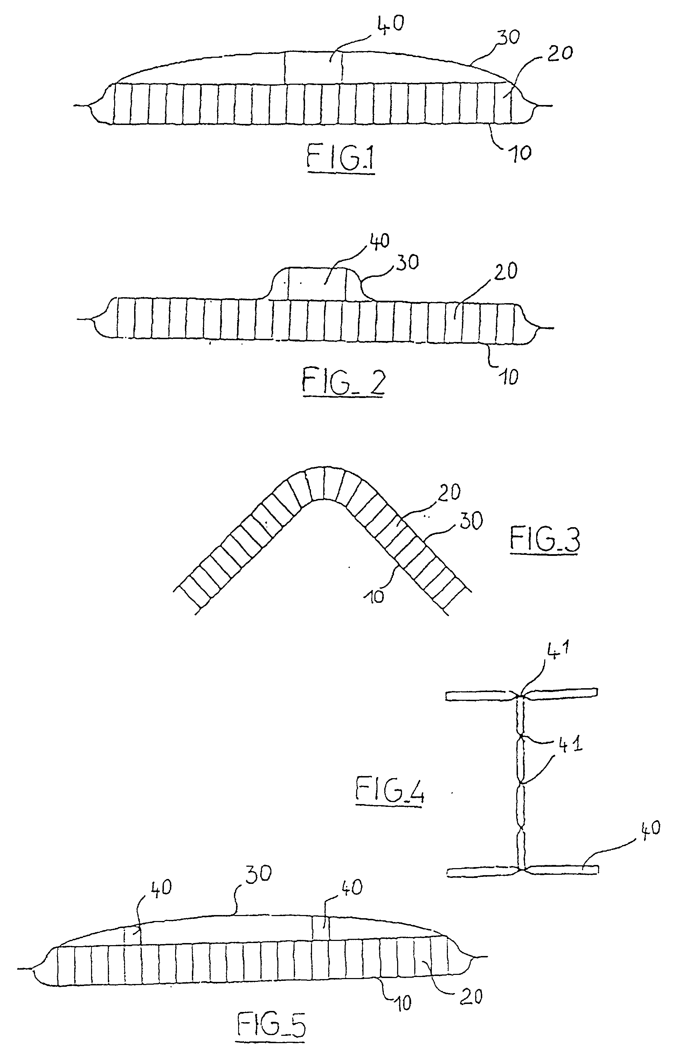

Sur la figure 1 on a représenté une étape préliminaire d'un procédé pour réaliser une pièce de véhicule automobile, en matériau composite du type sandwich à âme alvéolaire, pourvue d'une zone emboutie en profondeur.

Suivant ce procédé, on utilise un panneau comprenant un empilement constitué d'au moins une première peau 10, d'une âme alvéolaire en matériau thermoplastique 20 et d'une deuxième peau 30.

L'âme alvéolaire en matériau thermoplastique 20 peut être une mousse ou encore une âme alvéolaire du type nid d'abeilles dans laquelle les alvéoles sont de forme géométrique déterminée, délimitées par des parois fines en matériau thermoplastique tel que du polypropylène et réparties régulièrement.

Les première et seconde peaux 10, 30 sont constituées d'un matériau thermoplastique renforcé. Il peut s'agir d'un mat de fibres de verre longues noyées dans du polypropylène, dans lequel la répartition des fibres est aléatoire ou d'un tissage de fibres de verre noyées dans du polypropylène.

Selon cette première étape du procédé, on place entre la peau 30 située du côté de la face concave du moule de formage et l'âme alvéolaire 20, à un endroit déterminé, un élément de réserve 40 de façon à décoller à cet endroit ladite peau 30 de l'âme alvéolaire 20.

Comme la montre la figure 1, suivant cette première étape du procédé représenté, on réalise un pré-assemblage dudit empilement comprenant l'élément de réserve 40, par soudage à chaud, par chauffage infrarouge par exemple, de la première peau 10 à la deuxième peau 30 au niveau des coins dudit empilement.

L'introduction de l'élément de réserve 40 permet de réserver une quantité suffisante de longueur de peau 30 pour, comme cela sera décrit ultérieurement, presser ledit panneau de façon à former une pièce d'épaisseur constante comprenant une zone emboutie en profondeur à l'endroit déterminé où est placé l'élément de réserve 40.

Sur la figure 2, on a représenté l'étape de chauffage dudit pré-assemblage à une température de ramollissement desdites première et deuxième peaux 10, 30 de sorte que la peau 30 recouvrant l'élément de réserve 40 épouse sensiblement la forme de ce dernier.

La température de chauffage de l'empilement est telle qu'à la sortie du four, les première et deuxième peaux présentent une température comprise entre 160°C et 200°C environ.

Dans une étape ultérieure, le pré-assemblage ainsi chauffé est placé en sortie du four dans le moule de formage avec la peau 30 recouvrant l'élément de réserve 40 située du côté de la face concave du moule, et pressé à une pression comprise entre 1 et 3 MPa, les première et deuxième peaux étant ramollies, de sorte qu'à l'endroit où est placé l'élément de réserve, on emboutit en profondeur ledit panneau pré-assemblé tout en conservant une épaisseur de pièce constance.

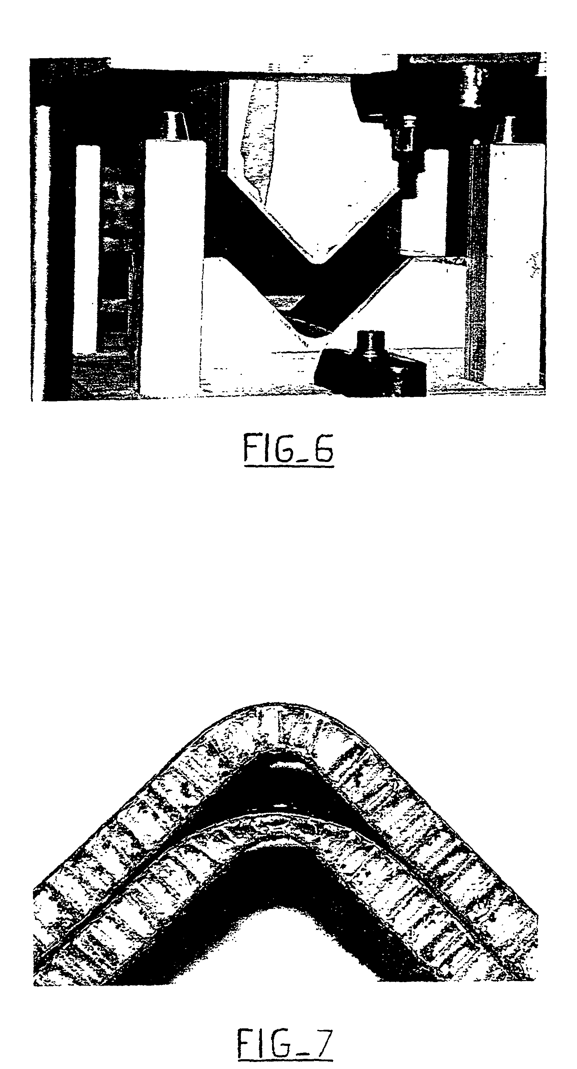

La zone emboutie en profondeur de la pièce ainsi obtenue est représentée plus particulièrement sur la figure 3.

Lors de cette étape, le surplus de la surface de la peau 30 recouvrant l'élément de réserve 40 sert alors à former le rayon de courbure de la zone emboutie en profondeur de la pièce à réaliser. Lors de cette étape l'élément de réserve est écrasé et/ou est inséré dans les cellules de l'âme alvéolaire lorsque celle-ci est du type nid d'abeilles avec des alvéoles à géométrie déterminée.

Comme le montre la figure 3 on forme ainsi grâce au procédé selon l'invention une pièce en matériau composite du type sandwich, qui peut présenter à un endroit particulier une forte courbure tout en conservant l'épaisseur de la pièce constante. Ceci est particulièrement intéressant car au niveau de la forte courbure la pièce conserve toute la rigidité du matériau sandwich.

L'élément de réserve 40 présente avantageusement les caractéristiques suivantes :

- il est recyclable (avantageusement constitué par du polypropylène),
- il conserve sa forme malgré la pression exercée par la peau le recouvrant lors de la réalisation du pré-assemblage et le chauffage de celui-ci à des températures élevées de l'ordre de 500°C,
- il disparaît par écrasement, assimilation, fusion, insertion, lors de la compression du panneau pour la formation de la pièce sans dégrader l'âme alvéolaire du panneau ou empêcher le lien entre la peau le recouvrant et l'âme alvéolaire,
- il est le plus léger possible,
- il présente une forme telle qu'il peut être facilement introduit et positionné entre la peau et l'âme alvéolaire de l'empilement lors d'une première étape du procédé (voire figure 1).

Un tel élément de réserve peut être alors un bloc de mousse dont la densité et la résistance en compression sont faibles. Ainsi la faible densité de l'élément de réserve lui permettra d'être suffisamment chauffé en surface pour se souder à l'âme et à la peau entre lesquelles il est placé mais sans se fondre complètement pour permettre de conserver l'écartement à l'endroit souhaité jusqu'à l'étape de pressage du panneau. Comme la résistance en compression d'un tel élément de réserve en mousse est faible par rapport à la résistance en compression de l'âme alvéolaire, lors de l'étape de pressage selon le procédé précité, il s'écrasera facilement sur l'âme alvéolaire si celle-ci est en mousse ou pénétrera dans les alvéoles d'une âme alvéolaire du type nid d'abeilles.

L'utilisation de la mousse pour réaliser l'élément de réserve offre un intérêt particulier, si on souhaite augmenter localement la résistance en compression de l'âme du matériau sandwich. En effet, en s'écrasant, la résistance en compression de la mousse constituant l'élément de réserve va augmenter.

Dans le cas où l'âme alvéolaire du matériau sandwich est une mousse, l'élément de réserve écrasé va alors compresser l'âme en augmentant par-là même sa résistance en compression.

Lorsque l'âme alvéolaire du matériau sandwich est du type nid d'abeille, l'élément de réserve en mousse va s'insérer dans les alvéoles en se compactant. La résistance de la compression globale de cet ensemble sera elle aussi augmentée.

Selon une variante préférée, l'élément de réserve peut être un ballon à paroi fine en polypropylène ou en polyéthylène, gonflé à l'air.

Un tel mode de réalisation présente les avantages suivants :

- la quantité de matière introduite entre l'âme et la peau tournée vers la face concave du moule est faible, car le ballon est constitué principalement d'air,
- la quantité de chaleur pour porter l'élément de réserve à une température proche de la fusion est en conséquence plus faible,
- un tel élément de réserve constitué par un ballon n'écrasera pas l'âme.

On notera qu'il est inattendu de pouvoir introduire un tel ballon à paroi fine de l'ordre de 150 μ par exemple en polypropylène ou en polyéthylène gonflé à l'air entre une peau et une âme qui par la suite vont être chauffées à une température relativement élevée sans que la peau fine du ballon n'en soit affectée avant l'étape de pressage de la pièce.

Lorsque le pré-assemblage de l'empilement contenant l'élément de réserve sous la forme d'un ballon gonflé à l'air, est chauffé, la peau recouvrant ledit ballon absorbe la chaleur du rayonnement et se ramollie en épousant ce dernier. Elle protège alors ledit ballon d'un échauffement accéléré en début de chauffage dudit pré-assemblage. Toutefois, il peut s'avérer qu'en fin de chauffage du pré-assemblage, le ballon chauffé par conduction de chaleur via la peau chauffée qui le recouvre, disparaisse par fusion. Dans ce cas, ledit ballon de réserve a tout de même permis avant de disparaître de réserver la longueur de peau nécessaire à la réalisation ultérieure d'une zone emboutie en profondeur à épaisseur constante dans le panneau composite du type sandwich.

Selon une autre variante, l'élément de réserve 40 utilisé peut être un support solide en polypropylène présentant des zones fusibles (un exemple d'un tel élément est représenté sur la figure 4). Les zones fusibles 41 de l'élément de réserve 40 sont réalisées par la réalisation de faiblesses aménagées en certaines parties du support.

Dans le cas où le matériau sandwich comprend une âme alvéolaire à alvéoles géométriquement régulières, lors de l'étape de pressage, la partie fusible du support constituant l'élément de réserve cède ce qui permet au support de s'introduire dans une des alvéoles de l'âme.

Lorsque l'âme alvéolaire du panneau utilisé pour réaliser la pièce est une mousse, lors de l'étape de pressage, ce support fusible s'enfonce facilement à l'intérieur de la mousse sans compresser de grandes surfaces. La zone de la mousse endommagée est très limitée.

Ce type de support est léger et modulable.

La figure 5 représente une variante du procédé selon l'invention, selon lequel on introduit entre la peau 30 tournée vers la face concave du moule et l'âme alvéolaire 20 de l'empilement, deux éléments de réserve 40, pour former à deux endroits déterminés différents de la pièce deux zones embouties profondes.

Des essais de mise en oeuvre du procédé précité ont été réalisés à l'aide d'un outil de thermocompression simple représenté sur la figure 6. Un tel outil permet de plier un panneau suivant un angle d'environ 90°, en pinçant les bords du panneau.

Dans ces essais, l'élément de réserve utilisé était un ballon en film de polyéthylène gonflé à l'air de façon à ce qu'il soulève la peau tournée vers la face concave du moule sur une hauteur suffisante pour obtenir la longueur supplémentaire de peau nécessaire. Cette peau soulevée n'est donc pas soumise à une contrainte de tension et n'écrase pas l'âme alvelaire du panneau.

Sur la figure 7 on voit en partie supérieure la résultat obtenus lors des essais.

Ainsi, comme on peut le constater sur cette figure, la pièce obtenue ne présente pas de diminution d'épaisseur au niveau de l'angle réalisé mais tout au contraire présente une épaisseur constante.

Par contre, en partie basse de la figure 7, on montre une pièce réalisée selon l'état de la technique où aucune réserve de peau n'est effectuée préalablement au pressage du panneau. On voit qu'une telle pièce est écrasée localement au niveau de l'angle.

La présente invention n'est nullement limitée au mode de réalisation décrit et représenté, mais l'homme du métier saura y apporter toute variante comprise dans le cadre défini par les revendications.

## Revendications

1. Procédé pour réaliser une pièce de véhicules automobiles, par pressage sous une pression comprise entre 1 et 3 MPa, d'un panneau comprenant un empilement constitué d'au moins une première peau (10), d'une âme alvéolaire en matériau thermoplastique (20) et d'une deuxième peau (30), lesdites peaux étant constituées d'un matériau thermoplastique renforcé, **caractérisé en ce qu'**il comprend les étapes suivantes :

   a) on place entre la peau (30) située du côté de la face concave du moule de formage et l'âme alvéolaire (20), à un endroit détermine, au moins un élément de réserve (40) de façon à décoller à cet endroit ladite peau de l'âme alvéolaire (20),
   b) on presse ledit panneau, lesdites première (10) et deuxième (30) peaux étant ramollies, de sorte qu'à l'endroit où est placé l'élément de réserve (40) on forme une zone emboutie en profondeur tout en conservant une épaisseur de pièce constante.

2. Procédé selon la revendication 1, **caractérisé en ce qu'**à l'étape a) on réalise un pré-assemblage dudit empilement comprenant l'élément de réserve (40), par soudage à chaud de la première peau (10) à la deuxième peau (20) au niveau des coins dudit empilement, puis on chauffe ledit pré-assemblage à une température de ramollissement desdites première (10) et deuxième (20) peaux de sorte que la peau recouvrant l'élément de réserve épouse sensiblement la forme de ce dernier.

3. Procédé selon l'une des revendications 1 ou 2, **caractérisé en ce que** l'élément de réserve (40) est constitué par du polypropylène.

4. Procédé selon l'une des revendications 1 à 3, **caractérisé en ce que** l'élément de réserve (40) est un bloc de mousse dont la densité et la résistance en compression sont faibles.

5. Procédé selon l'une des revendications 1 à 3, **caractérisé en ce que** l'élément de réserve (40) est un ballon gonflé à l'air.

6. Procédé selon l'une des revendications 1 à 3, **caractérisé en ce que** l'élément de réserve (40) est un support solide comportant des zones fusibles.

7. Pièce pour véhicules automobiles comprenant au moins une zone emboutie en profondeur, telle que réalisée selon le procédé selon l'une des revendications précédentes.

## Claims

1. A method of making a motor vehicle part by pressing a panel under a pressure lying in the range 1 MPa to 3 MPa, the panel comprising a stack made up of at least a first skin (10), a cellular core of thermoplastic material (20), and a second skin (30), said skins being made of a reinforced thermoplastic material, the method being **characterized in that** it comprises the following steps:

   a) placing at least one spacer element (40) at a determined location between the skin (30) situated beside the concave face of the forming mold and the cellular core (20), so as to separate said skin and said cellular core (20) at said location; and
   b) pressing said panel, said first and second skins (10 and 30) being softened so that at the location where the spacer element (40) is placed a deeply-dished zone is formed while maintaining constant thickness for the part.

2. A method according to claim 1, **characterized in that** in step a), said stack including the spacer element (40) is preassembled by heat-sealing the first skin (10) to the second skin (30) at the corners of said stack, said preassembly then being heated to a softening temperature of said first and second skins (10 and 30) so that the skin covering the spacer element fits substantially over the shape thereof.

3. A method according to claim 1 or claim 2, **characterized in that** the spacer element (40) is made of polypropylene.

4. A method according to any one of claims 1 to 3, **characterized in that** the spacer element (40) is a block of foam of low density and has compression strength.

5. A method according to any one of claims 1 to 3, **characterized in that** the spacer element (40) is an air-filled balloon.

6. A method according to any one of claims 1 to 3, **characterized in that** the spacer element (40) is a solid support having meltable zones.

7. A motor vehicle part comprising at least one deeply-dished zone, as made by the method according to any preceding claim.

## Patentansprüche

1. Verfahren zum Herstellen eines Bauteils für Kraftfahrzeuge durch Pressen einer Platte unter einem zwischen 1 und 3 MPa liegenden Druck, umfassend eine Schichtung, die durch wenigstens eine erste Haut (10), einen zellenartigen Kern (20) aus thermoplastischem Material und eine zweite Haut (30) gebildet ist, wobei die genannten Häute aus einem verstärktem thermoplastischem Material gebildet sind, **dadurch gekennzeichnet, daß** es die folgenden Schritte umfaßt:

   a) man plaziert zwischen der Haut (30), die an der Seite der konkaven Fläche der Form angeordnet ist, und dem zellenartigen Kern (20) an einer bestimmten Stelle mindestens ein Reserveelement (40), derart, daß an dieser Stelle die genannte Haut von dem zellenartigen Kern (20) abgehoben wird,
   b) man preßt die Platte, wobei die erste (10) und zweite (30) Haut erweicht sind, derart, daß man an der Stelle, an der das Reserveelement (40) plaziert ist, eine in der Tiefe gefüllte Zone ausbildet, wobei eine konstante Dikke des Bauteils erhalten wird.

2. Verfahren nach Anspruch 1, **dadurch gekennzeichnet, daß** man in Schritt a) einen Vorverband der das Reserveelement (40) umfassenden Schichtung durch Warmschweißen der ersten Haut (10) an die zweite Haut auf der Höhe der Ecken der Schichtung herstellt, und man dann den Vorverband auf eine Erweichungstemperatur der ersten (10) und zweiten (20) Haut erwärmt, derart, daß die Haut, die das Reserveelemente bedeckt, sich im wesentlichen an die Form dieses letzteren anpaßt.

3. Verfahren nach einem der Ansprüche 1 oder 2, **dadurch gekennzeichnet, daß** das Reserveelement (40) durch Polypropylen gebildet wird.

4. Verfahren nach einem der Ansprüche 1 bis 3, **dadurch gekennzeichnet, daß** das Reserveelement ein Block aus Schaum ist, dessen Dichte und Kompressionsfestigkeit gering sind.

5. Verfahren nach einem der Ansprüche 1 bis 3, **dadurch gekennzeichnet, daß** das Reserveelement (40) ein mit Luft gefüllter Ballon ist.

6. Verfahren nach einem der Ansprüche 1 bis 3, **dadurch gekennzeichnet, daß** das Reserveelement (40) ein fester Träger ist, der schmelzbare Zonen aufweist.

7. Bauteil für Kraftfahrzeuge, umfassend wenigstens eine in der Tiefe gefüllte Zone, derart, daß dieser gemäß einem der vorhergehenden Ansprüche hergestellt ist.

FIG.1

FIG_2

FIG_3

FIG_4

FIG_5

FIG_6

FIG_7